# EUROPÄISCHE PATENTSCHRIFT

(11) **EP 3 070 386 B1**
(45) Veröffentlichungstag und Bekanntmachung des Hinweises auf die Patenterteilung: **17.04.2019**
(21) Anmeldenummer: 16000530.2
(22) Anmeldetag: 04.03.2016
(51) Int. Cl.: F16L 19/065, F16L 19/10, F16L 19/12

(54) **SCHNEIDRING FÜR EINE ROHRVERSCHRAUBUNG**
CUTTING RING FOR A PIPE JOINT
BAGUE COUPANTE POUR RACCORD VISSE

(30) Priorität: 18.03.2015 DE 102015001835; 19.06.2015 DE 202015004352 U
(43) Veröffentlichungstag der Anmeldung: 21.09.2016
(73) Patentinhaber: Blanke, Franz, 53179 Bonn (DE)
(72) Erfinder: Blanke, Franz, 53179 Bonn (DE)
(74) Vertreter: Patentanwälte Walther Hinz Bayer PartGmbB

(56) Entgegenhaltungen:
- DE-U1- 29 604 873
- FR-A- 1 408 909
- FR-A1- 2 568 665
- GB-A- 881 304

## Beschreibung

Die vorliegende Erfindung betrifft einen Schneidring für eine Rohrverschraubung, insbesondere nach ISO 84 34, gemäß dem Oberbegriff des Anspruches 1.

In der ISO 84 34 und in der DE 1 762 323 U1 sind Rohrverschraubung zum lötfreien Verbinden zweier Rohre beschrieben, wie sie vorzugsweise in der Verfahrenstechnik, in der Hydraulik usw. eingesetzt werden, weil die Rohrverbindung dort hohe Drücke aushalten muss. Gleichzeitig soll die Rohrverbindung, insbesondere bei hohen Drücken auch dicht sein.

Aus der FR 1 408 909 A, der FR 2 568 665 und der GB 881 304 A sind solche Rohrverschraubungen bekannt.

Eine solche Rohrverschraubung umfasst einen Stutzen zur Aufnahme eines Rohres, einen Schneidring und eine Überwurfmutter. Gemäß der DE 1762323 U1 ist im Stutzen ein 24°- Innenkonus ausgebildet, in den ein Frontbereich des Schneidringes hineingelangt. An diesem Frontbereich des Schneidringes ist innen zum Rohr hin eine Frontschneide ausgebildet. Im Heckbereich des Schneidrings ist außen eine äußere, 45°-Anlagefläche vorgesehen, welche mit einer 45°-Schräge der Überwurfmutter korrespondiert. Beim Aufdrehen der Überwurfmutter auf den Stutzen wird der Schneidring über die Anlagefläche in axialer Richtung bewegt, sodass sich die an dem 24°-Konus anliegende Front des Schneid-ringes zur Längsachse hin bewegt und so dass sich die Schneidkante in die Oberfläche des Rohres einschneidet und somit eine stabile und dichte Verbindung begründet. Es gibt auch Ausführungen, bei denen die Frontschneide zwei oder drei Schneidkanten hintereinander aufweist, sodass hier eine entsprechend bessere Verbindung zwischen dem Schneidring und dem Rohr entsteht.

Aus der FR 1 408 909 A ist eine Rohrverschraubung bekannt, die im Frontbereich eine einzelne Frontschneide und im Heckbereich drei hintereinander angeordnete Heckschneiden aufweist. Allerdings weisen weder die Frontschneide, noch die drei Heckschneiden eine echte Schneidkante auf, denn aufgrund der zirka 30° geneigten Vorderflanke sowohl der Frontschneide, als auch der Heckschneiden ist ein spanabhebendes Schneiden im Rohr nicht möglich. Vielmehr werden die Front- und die Heckschneiden aufgrund der radial wirkenden Kräfte mit ihrer jeweiligen Schneide in das Rohr hineingetrieben und erzeugen dort eine umlaufende Kerbe, bedingt durch die Tatsache, dass jede Schneide eine zirka 30° aufweisende Vorder- und eine 30° aufweisende Hinterflanke aufweist. Durch dieses einquetschen der Front- und der Hinterscheiden in die Oberfläche des Rohres wird es nachfolgend fast unmöglich, den Schneidering in axialer Richtung voranzutreiben, weil die in das Rohr eingequetschte Frontschneide und Heckenschneiden aufgrund des in axialer Richtung befindlichen Materialwiderstandes nicht möglich ist. Hierdurch wird ein ordnungsgemäßes anziehen de Schneidringes in die gewünschte Endposition erschwert.

Analoges gilt auch für die aus der FR 2 568 665 A1 und die aus der GB 881 304 A bekannten Schraubverbindungen.

Je nach den thermischen Gegebenheiten und den eingesetzten Drücken innerhalb des Rohres kann es aber dennoch zu einer unerwünschten Tröpfchenbildung an der Verbindungsstelle kommen. Auch kommt es aufgrund von thermischer und/oder mechanischer Belastung im Laufe der Zeit vor, dass sich die Schneidverbindung teilweise wieder löst, was die Festhaltekraft und die Dichtigkeit reduziert.

Davon ausgehend liegt der vorliegenden Erfindung die Aufgabe zugrunde, den Schneidring einer Rohrverbindung der eingangs genannten Art zu schaffen, mit dem eine dauerhaft hohe Festhaltekraft und eine dauerhaft hohe Feindichtigkeit der Rohrverbindung erreicht wird.

Als technische Lösung dieser Aufgabe wird erfindungsgemäß ein Schneidring mit den Merkmalen des Anspruches 1 vorgeschlagen. Vorteilhafte Weiterbildungen dieses Schneidringes sind den jeweiligen Unteransprüchen zu entnehmen.

Ein nach dieser technischen Lehre ausgebildeter Schneidring hat den Vorteil, dass durch die Ausbildung einer Heckschneide im inneren Heckbereich des Schneidringes eine weitere formschlüssige Verbindung zwischen dem Schneidring und dem Rohr geschaffen wird. Ein weiterer Vorteil besteht darin, dass diese zusätzliche, formschlüssige Verbindung am Heck des Schneidringes angeordnet ist. Mit dieser Heckschneide wird erreicht, dass der Schneidring an zwei entfernt liegenden Punkten am Rohr gehalten ist, mit dem Vorteil, dass auftreffende mechanische Kräfte nicht zu einer Relativbewegung des Schneidringes gegenüber dem Rohr führen und dass somit die formschlüssige Verbindung sowohl an der Frontschneide, als auch an der Heckschneide dauerhaft erhalten bleibt. Hierdurch wird die Festhaltekraft und die Feindichtigkeit die Verbindung signifikant erhöht.

Ein weiterer Vorteil besteht darin, dass die Heckschneide durch einen umlaufenden Einstich geschaffen wird, wobei sich an der Hinterkante des Einstiches eine erste Schneidkante ausbildet. Hierdurch entsteht eine besonders scharfe Schneidkante, mit der ein spanabhebendes Einschneiden in das Rohr möglich wird.

Noch ein weiterer Vorteil besteht darin, dass der erste Einstich als Nut ausgebildet ist, in den eine Weichdichtung, eine O-Ring-Dichtung, eingelegt ist. Durch diese zusätzliche Weichdichtung wird das Austreten von Dampf, Gas oder Flüssigkeit zwischen Rohr und Schneidring zuverlässig verhindert.

Bei besonders hoch beanspruchten Rohrverbindungen kann an der Heckschneide neben der ersten Schneidkante auch eine zweite Schneidkante ausgebildet werden.

In einer besonders bevorzugten Ausführungsform ist im Bereich an einer Innenseite, dass heißt an einer dem Rohr zugewandten Seite des Schneid-ringes, zwischen der Heckschneide und der Hinterkante des Schneidringes eine Fase ausgebildet. Dabei hat es sich als vorteilhaft erwiesen, dass diese Fase zwischen 1° und 30°, vorzugsweise 15° gegenüber der Längsachse zu öffnen. Wird nun die Überwurfmutter angezogen, so wird über die 45°-Schräge der Überwurfmutter eine Kraft auf die Anlagefläche des Schneidrings ausgeübt, wobei das Heck des Schneidringes auf der Fase in einem gewissen Umfang nachgeben kann, und wobei sich somit die Schneidkante der Heckschneide in die Oberfläche des Rohres einschneidet.

Dieser Effekt verstärkt sich, wenn die Anlagefläche an der Außenseite des Schneidringes stärker geneigt ist, als die Schräge der Überwurfmutter. In diesem Fall liegt das Heck des Schneidringes linienhaft an der Schräge der Überwurfmutter an und beim Anziehen der Überwurfmutter wird die von der Überwurfmutter auf den Schneidring ausgeübte Kraft das Heck des Schneidringes zur Mittelachse hin bewegen und zwar soweit, bis die Anlagefläche vollständig an der Schräge der Überwurfmutter anliegt. Dabei wird auch die Schneidkante der Heckschneide zur Mittelachse des Rohres hin bewegt und schneidet sich zuverlässig in die Oberfläche des Rohres ein.

Weitere Vorteile des erfindungsgemäßen Schneidringes ergeben sich aus der beigefügten Zeichnung und den nachstehend beschriebenen Ausführungsformen. Die erwähnten Ausführungsformen sind nicht als abschließende Aufzählung zu verstehen, sondern haben vielmehr beispielhaften Charakter. Es zeigen:
- Fig. 1: eine geschnitten dargestellte Rohrverbindung auf einem Rohrende mit einer ersten Ausführungsform eines erfindungsgemäßen Schneidringes im Ausgangszustand;
- Fig. 2: eine Detailvergrößerung gemäß Linie II in Fig. 1 mit dem erfindungsgemäßen Schneidring im Ausgangszustand;
- Fig. 3: eine Detailvergrößerung gemäß Linie III in Fig. 1 mit dem erfindungsgemäßen Schneidring im Ausgangszustand;
- Fig. 4: die Rohrverbindung gemäß Fig. 1 im fertig montierten Endzustand;
- Fig. 5: eine Detailvergrößerung der Rohrverbindung gemäß gemäß Linie V in Fig. 4 mit dem erfindungsgemäßen Schneidring im Endzustand;
- Fig. 6: eine Detailvergrößerung der Rohrverbindung gemäß gemäß Linie VI in Fig. 4 mit dem erfindungsgemäßen Schneidring im Endzustand;
- Fig. 7: eine geschnitten dargestellte Rohrverbindung mit einer zweiten Ausführungsform eines erfindungsgemäßen Schneidringes im Ausgangszustand;
- Fig. 8: eine geschnitten dargestellte Rohrverbindung mit einer dritten Ausführungsform eines erfindungsgemäßen Schneidringes im Ausgangszustand.

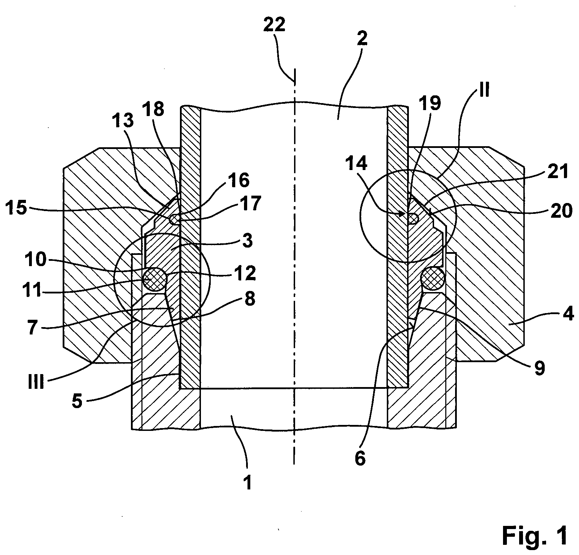

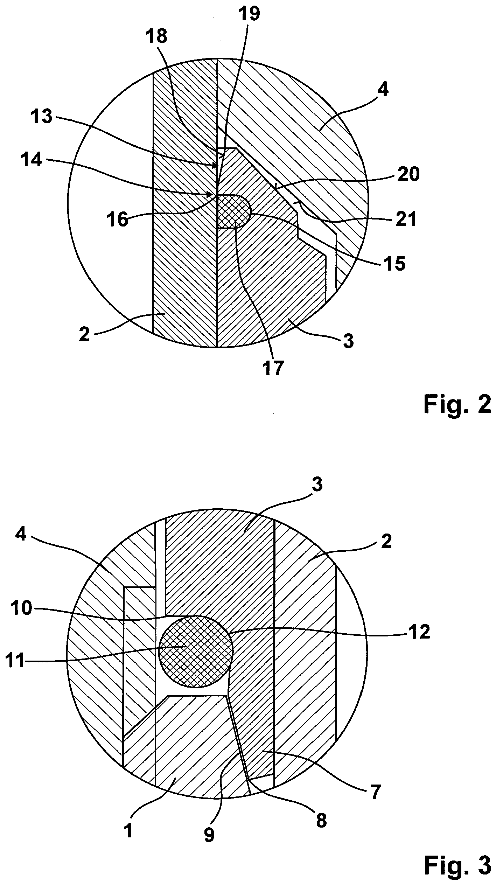

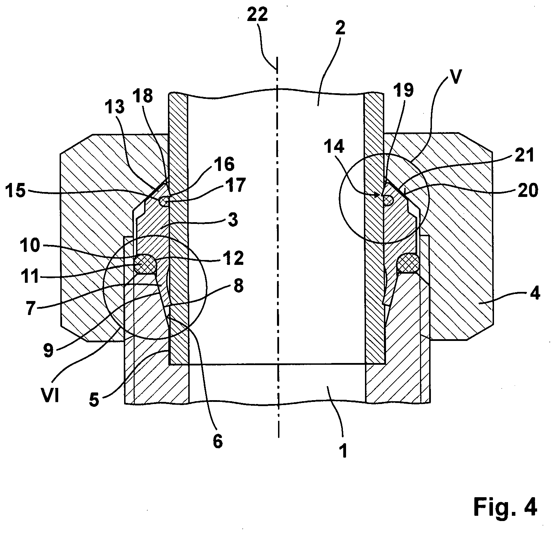

Figs. 1 bis 3 zeigen eine erste Ausführungsform einer Rohrverbindung im Ausgangszustand (hier: unmittelbar vor dem Anziehen der Überwurfmutter), während in den Figs. 4 bis 6 diese erste Ausführungsform im fertig montierten Zustand, dass heißt nach Abschluss der Montage der Rohrverbindung gezeigt ist.

Diese Rohrverbindung umfasst einen Stutzen 1 zur Aufnahme eines Endes eines Rohres 2, sowie einen auf dem Rohr 2 befindlichen Schneidring 3 und eine Überwurfmutter 4, welche über ein entsprechendes Gewinde direkt mit dem Stutzen 1 verbunden ist. Am Stutzen 1 ist eine Rohraufnahme 5 ausgebildet, in der ein 24°-Konus 6 vorgesehen ist. Ein zum Stutzen 1 hin ausgerichteter Frontbereich 7 des Schneidringes 3 besitzt an seiner Innenseite eine Frontschneide 8 und an seiner Außenseite eine korrespondierend zur 24°-Konus 6 gebildete Gleitfläche 9.
Beabstandet vom Frontbereich 7 ist am Schneidring 1 eine radial abstehende Schulter 10 vorgesehen, wobei zwischen der Schulter 10 und dem Stutzen 1 eine Weichdichtung 11 gehalten ist. Bei der in den Figs. 1 bis 6 dargestellten Ausführungsform ist diese Weichdichtung 11 als O-Ring ausgebildet und sitzt in einer zwischen dem Frontbereich 7 und der Schulter 10 ausgebildeten Vertiefung 12 des Schneidringes 3, sodass ein unbeabsichtigtes Herausrutschen des O-Ringes vor der Montage verhindert wird.

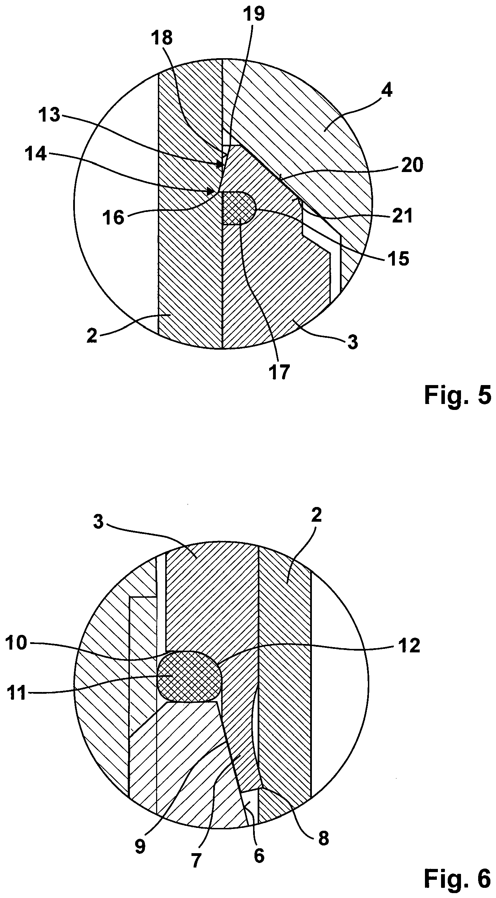

Diese Schulter 10 ist so ausgelegt und angeordnet, dass auch im montiertem Zustand ein Abstand zwischen der Schulter 10 und dem Stutzen 1 verbleibt, welcher von der Weichdichtung 11 gefüllt ist. Dies hat den Vorteil, dass der Schneidring 1 seine Elastizität behält, weil der Stutzen 1 ausschließlich auf den Frontbereich 8 einwirkt. Gleichzeitig ist die Schulter 10 so ausgelegt, dass die Weichdichtung 11 im montierten Zustand zwischen der Schulter 10 und dem Stutzen 1 gepresst wird. Dabei ragt ein Teil der Weichdichtung radial über den Schneidring 3 über und kommt an der Überwurfmutter 4 zur Anlage, sodass hier eine zuverlässige Dichtung entsteht, wie aus Fig. 6 ersichtlich ist.

Im Heckbereich 13 des Schneidringes 3 ist innenliegend eine Heckschneide 14 ausgebildet. Diese Heckschneide 14 umfasst einen innenseitig am Schneidring 3 umlaufenden Einstich 15, an dessen Hinterkante 19 sich eine Schneidkante 16 ausbildet. In der hier dargestellten Ausführungsform ist der Einstich 15 so ausgebildet, dass eine Weichdichtung, insbesondere eine O-Ring-Dichtung 17, in den Einstich 15 einlegbar ist, um zwischen der Oberfläche des Rohres 2 und dem Schneidring 3 eine dauerhaft zuverlässige Abdichtung zu erreichen.

An der Innenseite des Schneidringes 3 ist hinter der Heckschneide 14 eine Fase 18 ausgebildet, die bis zu einer Hinterkante 19 des Schneidrings 1 reicht. Diese Fase 18 hat einen Öffnungswinkel von 15°. An der Außenseite des Schneidrings 3 ist eine umlaufende Anlagefläche 20 ausgebildet, deren Neigung größer ist, als die Neigung der Schräge 21 der Überwurfmutter 4. Gemäß ISO 84 34 hat die Schräge 21 eine Neigung von 45°, sodass die Anlagefläche 20 einer Neigung von mehr als 45°, vorzugsweise 60° besitzt. Auch wäre für die Anlagefläche 20 eine Neigung von 75° denkbar.

Aufgrund der stärkeren Neigung der Anlagefläche 20 gegenüber der Schräge 21 liegt die Anlagefläche 20 im Ausgangszustand entlang einer umlaufenden Linie an der Schräge 21, und somit an der Überwurfmutter 4 an. Beim Anziehen der Überwurfmutter 4 wird dann über die Schräge 21 und die Anlagefläche 20 eine Kraft auf den Heckbereich 13 des Schneid-ringes 3 ausgeübt, sodass sich der gesamte Heckbereich 13 in Richtung der Längsachse 29 des Rohres 2 bewegt und damit die Schneidkante 16 in die Oberfläche des Rohres 2 einschneidet. Hierdurch wird ein besonders zuverlässiges Einschneiden der Schneidkante 16 in das Rohr 2 und damit eine besonders zuverlässige Rohrverbindung mit einer hohen Festhaltekraft und einer hohen Feindichtigkeit erreicht, wobei die Festhaltekraft gegenüber aus dem Stand der Technik bekannten Rohrverbindungen um 33% erhöht ist.

In den Figs 4 bis 6 ist die in den Figs. 1 bis 3 beschriebene Verbindung im montierten Zustand, dass heißt im Endzustand dargestellt. Dabei hat sich sowohl die Frontschneide 8 als auch die Heckschneide 14 in die Oberfläche des Rohres 2 eingeschnitten und der Schneidring 3 wird mittels des Stutzens 1 und der Überwurfmutter 4 in dieser Position gehalten.

In diesem Endzustand füllt die Weichdichtung 11 den Spalt zwischen der Schulter 10 und dem Stutzen 1 aus, und dichtet die Rohrverbindung zusätzlich ab. Gleichzeitig wird aber aufgrund des durch den Abstand der Schulter 10 vom Stutzen 1 gebildeten Spaltes die Elastizität des Schneidringes 3 und damit dessen Federwirkung erhalten, sodass bei thermischen Verformungen der einzelnen Bauteile keine bleibenden Materialverformungen entstehen und darüber hinaus eine zuverlässige Verbindung nebst Dichtigkeit erreicht wird.

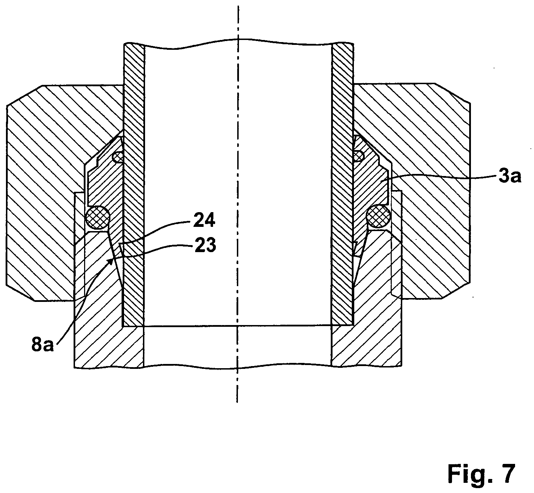

In Fig. 7 ist eine Rohrverbindung mit einer zweiten Ausführungsform eines erfindungsgemäßen Schneidringes dargestellt. Dieser Schneidring 3a unterscheidet sich von dem in den Figs. 1 bis 6 dargestellten Schneidring 3 lediglich dahin gehend, dass die Frontschneide 8a zwei verschiedene Schneidkanten 23 und 24 aufweist, die hintereinander angeordnet sind.

In einer weiteren, hier nicht dargestellten Ausführungsform sind in der Frontschneide 3 verschiedene Schneidkanten vorgesehen.

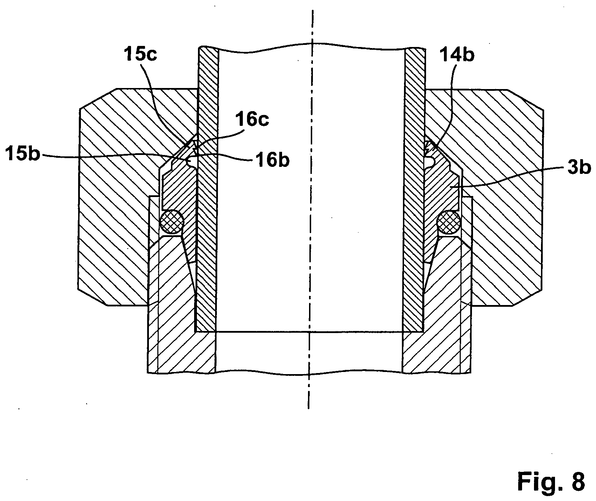

In der in Fig. 8 dargestellten Rohrverbindung ist eine dritte Ausführungsform eines erfindungsgemäßen Schneidringes 3b dargestellt, die sich von der in den Figs 1 bis 6 dargestellten Ausführungsform lediglich dadurch unterscheidet, dass die Heckschneide 14b zwei Schneidkanten 16b und 16c aufweist, die hintereinander angeordnet sind. Dabei ist die Schneidkante 16b durch einen als Nut ausgebildeten Einstich 15b gebildet, in den eine Weichdichtung einlegbar ist, während die Schneidkante 16c durch einen kleineren Einstich 15c gebildet ist. Hierdurch verkürzt sich die Fase 18b dementsprechend.

In einer weiteren, hier nicht dargestellten Ausführungsform sind in der Heckschneide 3 verschiedene Schneidkanten vorgesehen.

## Patentansprüche

1. Schneidring für eine Rohrverschraubung, mit einem einem Stutzen (1) der Rohrverschraubung zugewandtem Frontbereich (7) und mit einem einer Überwurfmutter (4) der Rohrverschraubung zugewandtem Heckbereich (13), wobei im Frontbereich (7) eine Frontschneide (8) ausgebildet ist,
wobei im Heckbereich (13) eine Heckschneide (14) ausgebildet ist,
**dadurch gekennzeichnet,**
**dass** der Schneidring eine O-Ring-Dichtung (17) aufweist, dass an der Heckschneide (14) ein umlaufender Einstich (15, 15b) vorgesehen ist, der als Nut zur Aufnahme der O-Ring-Dichtung (17) ausgebildet ist und dass an der Hinterkante des Einstichs (15, 15b) eine erste Schneidkante (16, 16b) ausgebildet ist.

2. Schneidring nach Anspruch 1,
**dadurch gekennzeichnet,**
**dass** hinter der ersten Schneidkante (16b) ein zweiter Einstich (15c) vorgesehen ist, an dem sich eine zweite Schneidkante (16c) ausbildet.

3. Schneidring nach einem der vorangehenden Ansprüche,
**dadurch gekennzeichnet,**
**dass** im Heckbereich (13) an einer Innenseite des Schneidringes (3) zwischen der Heckschneide (14) und der Hinterkante (19) des Schneidringes (3) eine Fase (18) ausgebildet ist.

4. Schneidring nach einem der vorangehenden Ansprüche,
**dadurch gekennzeichnet,**
**dass** im Heckbereich (13) an einer Außenseite des Schneidringes (3) eine umlaufende Anlagefläche (20) ausgebildet ist, die an einer Schräge (21) der Überwurfmutter (4) der Rohrverschraubung zur Anlage kommen kann, wobei die Anlagefläche (20) stärker als die Schräge (21) geneigt ausgebildet ist, sodass die Anlagefläche (20) die Schräge (21) zunächst entlang einer umlaufenden Linie kontaktieren kann.

## Claims

1. A cutting ring for a pipe joint with a front area (7) facing a connecting piece (1) of the pipe joint, and with a rear area (13) facing a union nut (4) of the pipe joint, wherein in the front area (7) a front blade (8) is formed,
wherein in the rear area (13) a rear blade (14) is formed,
**characterised in**
**that** the cutting ring comprises an O-ring seal (17), that a circumferential recess (15, 15b) is provided on the rear blade (14), which is formed as a groove for receiving the O-ring seal (17), and that on the rear edge of the recess (15, 15b) a first cutting edge (16, 16b) is formed.

2. The cutting ring according to claim 1,
**characterised in**
**that** behind the first cutting edge (16b), a second recess (15c) is provided on which a second cutting edge (16c) is formed.

3. The cutting ring according to any one of the preceding claims,
**characterised in**
**that** in the rear area (13) on an inside of the cutting ring (3) between the rear blade (14) and the rear edge (19) of the cutting ring (3), a chamfer (18) is formed.

4. The cutting ring according to any one of the preceding claims,
**characterised in**
**that** in the rear area (13) on an outside of the cutting ring (3), a circumferential bearing surface (20) is formed, which can come to bear on an inclination (21) of the union nut (4) of the pipe joint, wherein the bearing surface (20) is inclined more than the inclination (21) so that the bearing surface (20) can contact the inclination (21) at first along a circumferential line.

## Revendications

1. Bague coupante pour un raccord vissé pour tube avec une partie avant (7) faisant face à une tubulure (1) du raccord vissé pour tube, et avec une partie arrière (13) faisant face à un écrou-raccord (4) du raccord vissé pour tube, une lame frontale (8) étant formée dans la partie avant (7),
une lame arrière (14) étant formée dans la partie arrière (13),
**caractérisé en ce**
**que** la bague coupante comprend un anneau torique d'étanchéité (17), qu'une entaille circonférentielle (15, 15b) est prévue à la lame arrière (14) qui est formée en tant que rainure pour recevoir l'anneau torique d'étanchéité (17), et qu'au bord arrière de l'entaille (15, 15b) un premier bord coupant (16, 16b) est formé.

2. Bague coupante selon la revendication 1,
**caractérisé en ce**
**que** derrière le premier bord coupant (16b) une seconde entaille (15c) est prévue à laquelle un second bord coupant (16c) est formé.

3. Bague coupante selon l'une quelconque des revendications précédentes,
**caractérisé en ce**
**que** dans la partie arrière (13) sur une partie intérieure de la bague coupante (3) entre la lame arrière (14) et au bord arrière (19) de la bague coupante (3) un chanfrein (18) est formé.

4. Bague coupante selon l'une quelconque des revendications précédentes,
**caractérisé en ce**
**que** dans la partie arrière (13) sur une partie extérieure de bague coupante (3) une surface d'appui circonférentielle (20) est formée qui peut venir en appui à une inclinaison (21) de l'écrou-raccord (4) du raccord vissé pour tube, la surface d'appui (20) étant plus inclinée que l'inclinaison (21) de sorte que la surface d'appui (20) peut contacter l'inclinaison (21) tout d'abord le long d'une ligne circonférentielle.
